(19) **Europäisches Patentamt / European Patent Office / Office européen des brevets**

(11) **EP 3 063 561 B1**

(12) # EUROPEAN PATENT SPECIFICATION

(45) Date of publication and mention
of the grant of the patent:
**26.06.2019 Bulletin 2019/26**

(51) Int Cl.:
*G01V 1/00* *(2006.01)*    *G01V 1/30* *(2006.01)*

(21) Application number: **14796362.3**

(86) International application number:
**PCT/US2014/062541**

(22) Date of filing: **28.10.2014**

(87) International publication number:
**WO 2015/065952 (07.05.2015 Gazette 2015/18)**

(54) **TWO STAGE SEISMIC VELOCITY MODEL GENERATION**

ERZEUGUNG EINES ZWEISTUFIGEN SEISMISCHEN GESCHWINDIGKEITSMODELLS

GÉNÉRATION DE MODÈLE DE VITESSE SISMIQUE EN DEUX ÉTAPES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.10.2013 US 201361896394 P**

(43) Date of publication of application:
**07.09.2016 Bulletin 2016/36**

(73) Proprietor: **BP Corporation North America Inc.
Houston, TX 77079 (US)**

(72) Inventors:
• **BRENDERS, Andrew
Naperville, Illinois 60563 (US)**
• **DELLINGER, Joseph
Naperville, Illinois 60563 (US)**

(74) Representative: **Hamer, Christopher K. et al
Mathys & Squire LLP
The Shard
32 London Bridge Street
London SE1 9SG (GB)**

(56) References cited:
**US-A1- 2012 155 217**

• **ANDREW J. BRENDERS ET AL: "Comparison of
3D time- and frequency-domain waveform
inversion: Benefits and insights of a broadband,
discrete-frequency strategy", SEG TECHNICAL
PROGRAM EXPANDED ABSTRACTS 2012, 1
September 2012 (2012-09-01), pages 1-5,
XP055159996, DOI: 10.1190/segam2012-1299.1**

Printed by Jouve, 75001 PARIS (FR)

**Description**

## DESCRIPTION OF THE INVENTION

### Related Application

This application is related to and claims priority from U.S. Provisional Application No.61/896,394 entitled "Two Stage Seismic Velocity Model Generation," filed October 28, 2013, in the name of the inventors Andrew Brenders and Joseph Anthony Dellinger.

### Field of the Invention

The presently disclosed technique pertains to the processing and analysis of seismic data for the location of subsurface hydrocarbons and other fluids and, more particularly, to the generation of seismic velocity models for use in such activities.

### Background of the Invention

The pursuit of hydrocarbons and some other fluids is sometimes greatly hampered by their being located in deposits underground, in certain types of geological formations. Such deposits must be identified and located by indirect, rather than direct, observation. This typically involves imparting acoustic waves of certain frequencies into the ground. When they encounter certain features in geological formations, they are reflected back to the surface and recorded as seismic data. The seismic data contains information regarding the buried geological formations from which one can ascertain things like the presence and location of hydrocarbon deposits. That is, seismic data are representative of the geological formations from which they are obtained.

For example, one tool frequently used in the analysis of the seismic data is what is known as a "velocity model". A velocity model is a representation of the geological formation that can be used in analysis. It may be used to, for example, convert the seismic data into one or more "seismic domains" that image the geological formation in different ways. The quality of these images frequently depends upon the quality of the velocity model. It may also be used in other ways to, for another example, analyze various geophysical characteristics of the formation. Other types of models of the underlying geological formations, collectively called "subsurface attribute models" herein, are also used and implicate similar considerations.

Over time, the need to locate hydrocarbon deposits more accurately and more precisely has grown. Sometimes advances in accuracy and precision come in the form of new acquisition techniques. Other times such advances are achieved through the manner in which the seismic data are processed such as those described in the above. Sometimes advances result from a combination of developments in both acquisition and processing.

The use of low frequencies for imaging in general, and for generating subsurface attribute models in particular, has proven challenging for frequencies below about 6 Hz, particularly for frequencies below about 4 Hz. The challenge is twofold: at lower frequencies the natural background noise of the Earth gets progressively stronger, and conventional broadband sources such as airguns get progressively weaker. As a result, the signal-to-noise of deepwater marine seismic data can decline at over 20 dB per octave for frequencies below 4 Hz.

Thus, while there may be many suitable techniques for seismic imaging in general and for generating subsurface attribute models in particular, the need for increased effective signal-to-noise at low frequencies continues to drive innovation in the art. In particular, among other things, there is a need for acquisition and processing techniques that enhance our ability to acquire and use low-frequency seismic data at lower frequencies. The art is therefore receptive to improvements or at least alternative means, methods and configurations that might further the efforts at improvement. The art will consequently well receive the technique described herein.

## SUMMARY

In a first aspect, a computer-implemented process includes: performing a first full waveform inversion on an initial subsurface attribute model using low frequency, known source-signature data and low frequency humming seismic data to generate a first updated subsurface attribute model; and performing a second full waveform inversion on the first updated subsurface attribute model using low-frequency, narrowband sweeping known source-signature data and low-frequency, swept seismic data to generate a second updated subsurface attribute model.

## BRIEF DESCRIPTION OF THE DRAWINGS

The accompanying drawings, which are incorporated in and constitute a part of this specification, illustrate embodiments of the invention and together with the description, serve to explain the principles of the invention. In the figures:

Figure 1 and Figure 2 conceptually illustrate the work flow of a two-stage process for generating a seismic subsurface attribute model in accordance with one particular embodiment of the presently disclosed technique.

Figure 3 depicts selected portions of the hardware and software architecture of an exemplary computing apparatus on which that aspect of the presently disclosed technique shown in Figure 1 and Figure 2 may be performed.

Figure 4 depicts an exemplary acquisition for the seismic data in one particular embodiment.

Figure 5 illustrates one particular embodiment of the computing apparatus of Figure 3 which is, more particularly, a computing system on which some aspects of the present invention may be practiced in some embodiments.

Figure 6 depicts a synthetic true model used to illustrate the operation of one particular embodiment.

Figure 7 illustrates one particular embodiment of the workflow first shown in Figure 1.

Figure 8 depicts an initial velocity model first shown in Figure 7.

Figure 9 graphs the source signature in the time domain for the low frequency humming data acquired as shown in Figure 4 and used in the exemplary workflow of Figure 7.

Figure 10 shows the phase of the data in Figure 9 for all sources and receivers.

Figure 11 depicts the first updated velocity model of the embodiment in Figure 7 upon completion of the selected number of full waveform inversion ("FWI") iterations.

Figure 12-Figure 13 present a one-dimensional slice through the first updated velocity model in Figure 11, with the starting model and true model for comparison.

Figure 14 graphs the source signature in the time domain for the narrowband swept data of the embodiment in Figure 7.

Figure 15 depicts the second updated velocity model of the embodiment in Figure 7 upon completion of the selected number of FWI iterations.

Figure 16 presents a one-dimensional slice through the second updated velocity model in Figure 15, with the first updated velocity model and true model for comparison.

## DESCRIPTION OF THE EMBODIMENTS

Accurate subsurface attribute models provide good seismic images of the subsurface. The presently disclosed technique is a method for improving acquisition, processing, and in particular subsurface attribute model building in an environment where the signal-to-noise ratio rapidly decreases at progressively lower frequencies. We define "low frequencies" as "frequencies below which getting sufficient signal-to-noise with conventional airgun sources rapidly becomes more difficult as the frequency decreases", i.e., below about 6-8 Hz.

One strategy for acquiring data as described above uses a controlled-frequency source to generate a narrow-bandwidth signal. This concentrates the source's power into a narrower frequency bandwidth, thereby increasing the signal-to-noise over that narrow bandwidth. In general, "narrow bandwidth" means less than two octaves, although in some embodiments it may be up to three octaves. See U.S. Application Serial No. 13/327,524, filed December 15, 2011.

Particularly useful in producing a narrow bandwidth is a source that can also produce a single monochromatic frequency. In this case, the bandwidth is limited by the frequency stability of the source, the length of time the source is active, or the length of time that can be considered as a single "shot point," given the wavelengths of the signal and the speed of motion of the source relative to the acquisition grid. Acquisition with a monochromatic controlled-frequency source in this manner is "humming acquisition" and a source operated in this way a "humming source".

If the sources were unlimited in strength, one could simply use a source loud enough to overcome the noise background. One could then use conventional broadband processing/inversion/imaging techniques for low frequencies just as is already done for higher frequencies where the Earth's noise background is not so challenging. In practice the size and power of our sources are limited by practical, technical, and environmental considerations. As a result, conventional processing has had limited success at low frequencies. Nevertheless, it is still desirable to use sources that are "as broadband as practicable".

With data of sufficiently low frequencies and signal-to-noise, one technique well known to those in the art for constructing a subsurface attribute model is full-waveform inversion ("FWI"). Typically, FWI begins at low frequencies (as low as possible) and then adds higher and higher frequencies. The subsurface attribute model thereby slowly comes into focus with progressively finer features being added as the rounds of inversion continue. The subsurface attribute model output by each stage of the process then becomes the starting model for the next stage. *See* L. Sirgue & R.G. Pratt, "Efficient Waveform Inversion and Imaging: A Strategy for Selecting Temporal Frequencies", 69 Geophysics 231 (2004) ("Sirgue & Pratt (2004)").

The presently disclosed technique provides two stages of a three-stage process for generating an improved seismic subsurface attribute model. A first stage uses humming acquisition at the lowest frequencies, where the signal-to-noise challenge is greatest. The technique then transitions to narrowband acquisition at somewhat higher (but still low) frequencies, taking advantage of the increasing signal-to-noise to allow an increased (but still narrowband) source bandwidth. Finally, at higher frequencies, where the signal-to-noise ratio of the data is no longer limiting, we transition to conventional broadband acquisition and processing, as is well known in the art. This third stage corresponds to current practice and will not be discussed further.

Reference will now be made in detail to the exemplary embodiments of the subject matter claimed below, examples of which are illustrated in the accompanying drawings. Wherever possible, the same reference numbers will be used throughout the drawings to refer to the same or like parts.

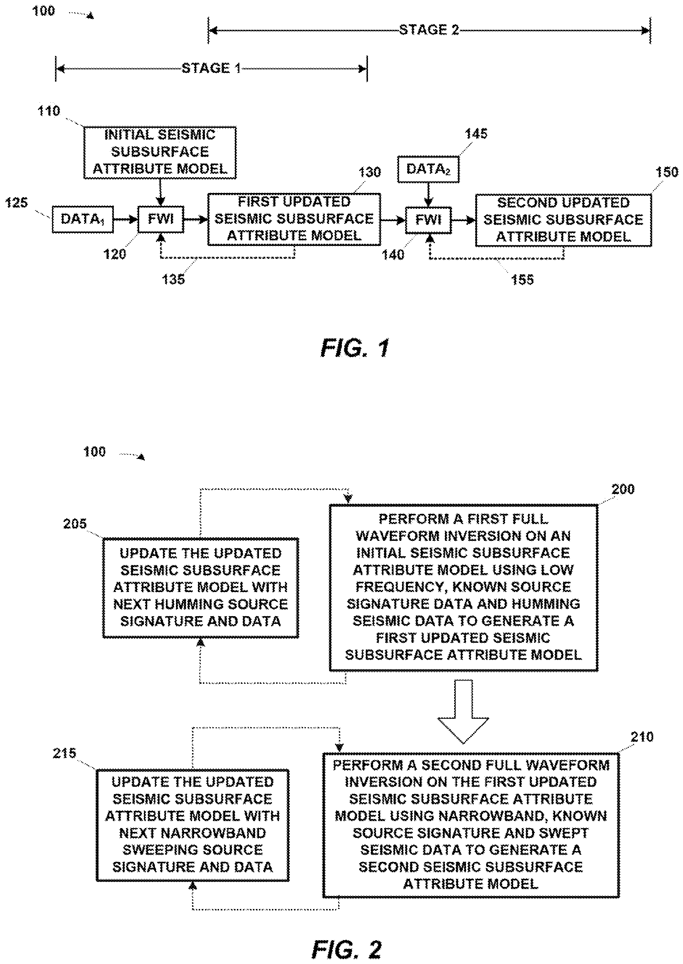

Figure 1 and Figure 2 conceptually illustrate a work flow 100 of a two-stage process for generating a subsurface attribute model in accordance with one particular embodiment of the presently disclosed technique. In the illustrated embodiment of the presently disclosed technique, the subsurface attribute model is a seismic velocity model. In some embodiments, the subsurface attribute may be an isotropic parameter such as velocity, density, bulk modulus, or shear modulus. In other embodiments, the subsurface parameter may be an anisotropic parameter such as epsilon, delta, or the constants of the stiffness tensor. The subsurface attribute model may also comprise two or more parameters at each spatial location, for example velocity and density.

The work flow 100 begins with an initial subsurface attribute model 110 of the geological formation for which the seismic data being processed has been acquired. The subsurface attribute modeled by the subsurface attribute model 110 may be either an isotropic or an anisotropic attribute. In this particular embodiment, the subsurface attribute is seismic velocity. The initial velocity model 110 may be of any kind generated by any technique known to those in the art. This may include, for example, a velocity model generated by reflection tomography although it may be as simple as a one-dimensional ("1D") velocity gradient.

The initial velocity model 110 may be developed from data acquired in the survey whose results are being analyzed. It may therefore be generated specifically as the starting point for the two stage process described herein. However, in some embodiments, the initial subsurface attribute model 110 may be a "legacy model" of an earlier analysis or generated from "legacy data" acquired in an earlier survey of the geological formation under analysis. The technique admits wide latitude in the generation and selection of the initial subsurface attribute model 110.

The work flow 100 then performs (at 200, Figure 2) a first FWI 120 on the initial subsurface attribute model 110 using low-frequency, known source-signature data and humming seismic data 125 to generate a first updated subsurface attribute model 130. As is well known to those of ordinary skill in the art, the transmission, reflection, diffraction, etc., of seismic waves within the earth can be modeled with considerable accuracy by the wave equation, and accordingly wave-equation-based wavefield-extrapolation engines are the method of choice for difficult imaging problems. The wave equation is a partial differential equation that can readily be couched in terms of one, two, or three dimensions.

For complex imaging challenges, the constant-density acoustic wave equation extrapolating in time is typically used as the extrapolation engine. Coupled with an imaging condition it yields an image of reflectors inside the earth. Imaging in this way is called "reverse-time migration". The same extrapolation engine can also be used within an iterative optimization process that attempts to find an earth model that explains all of the seismic information recorded at the receivers. This is called "full-waveform inversion". Ideally, inversion produces a three-dimensional ("3D") volume giving an estimated subsurface wave velocity at each illuminated point within the earth. If the acoustic wave equation is used, which incorporates both velocity and density as medium parameters, inversion may produce a 3-dimensional volume giving both the velocity and density at each point.

Returning to Figure 1, the first updated subsurface attribute model 130 may model either an isotropic or an anisotropic attribute. Depending on the embodiment, the first FWI 120 may be either a time-domain or a frequency-domain FWI. Still other embodiments may find other kinds of FWI suitable for implementation. Those in the art having the benefit of this disclosure will appreciate that the FWI is an iterative process, as indicated by the broken line 135. If the first FWI 120 is a time-domain implementation, the known source signature will be input as a time-series. If the first FWI 120 is a frequency-domain implementation, the known source signature will be input as a single complex-valued scalar, representing the phase and amplitude of the humming source, or in some embodiments just the phase.

As mentioned above, the FWI is performed using the low frequency, known source-signature data and "humming" seismic data, i.e., the data 125 ("$DATA_1$"). In an embodiment, "low frequency" is less than about 6-8 Hz and, more typically, less than about 4 Hz. In another embodiment, the low-frequency humming seismic data includes data acquired at a seismic frequency of less than about 2 Hz. In yet another embodiment, the low-frequency humming seismic data includes data acquired at a seismic frequency of less than about 1.5 Hz. The term "about" is a recognition that in acquisition seismic sources may come out of calibration or be poorly calibrated, simultaneously radiate at additional frequencies (for example from harmonics or from noise from a compressor), or that their signals can drift or in other ways deviate from what is desired. Thus, the term "about" means that the actual frequency is within the operational error acceptable to those in the art relative to the desired frequency of acquisition.

Also as is mentioned above, the source signature of the seismic data is known. This particular embodiment therefore omits true source signature determination in this FWI. Those in the art will appreciate that the source signature permits the analysis to identify certain characteristics defining the conditions under which the source signal is imparted into the environment. These include characteristics such as the location, depth, and velocity of the source, the hum produced by the source, and more generally the complete time history (phase, amplitude, or both) of the radiated acoustic signal for each hum, as are well known in the art. In some embodiments, use of the source signature in this manner will include use of the physical record. In other, alternative embodiments, it may involve representing the source signature in a single complex-valued scalar number in a manner known to the art.

The seismic data 125 is also known as "humming" seismic data. The term "humming" identifies the mode of acquisition. "Humming" is using a non-impulsive controlled-frequency source that generates substantially all of its energy at a single frequency. Due to practical stability limitations the source may instead perform a controlled or uncontrolled drift within a narrow frequency range, typically staying within plus or minus one tenth of an octave around the nominal frequency. This is sometimes what is called "monochromatic" or "near monochromatic", for example in U.S. Application Serial No. 13/327,524.

Humming acquisition may occur in several different ways. For example, stepped humming is a sequential humming acquisition in which a single source steps over a set of two or more discrete frequencies, one at a time. The time spent moving between frequencies should be very small compared to the time spent at each frequency. Chord humming is a humming acquisition in which two or more sources simultaneously hum at differing discrete frequencies. More information is available in U.S. Application Serial No. 13/327,524.

When humming acquisition is performed at differing discrete frequencies, the first stage may be iterated for a number of low-frequency humming seismic datasets, each acquired with monotonically increasing low-frequency humming sources. The subsurface attribute model from the FWI of the previous humming source would be used as the initial subsurface attribute model for the FWI of the next low-frequency humming seismic dataset, with the frequencies of each dataset increasing monotonically. In this particular embodiment, the first stage is described as being performed once, for a single low-frequency humming dataset. In other embodiments, the first stage may be performed two or more times, for a number of low-frequency humming seismic datasets at different frequencies, as indicated by the optional outer iteration loop 205. A typical number of humming datasets may be 2, and probably not exceeding 10. Returning to Figure 1-Figure 2, similarly, the second stage may also be performed two or more times for a number of different narrowband sweeping seismic datasets, as indicated by the optional outer iteration loop 215.

Returning to Figure 1-Figure 2, the first stage yields the first updated subsurface attribute model 130. The first FWI 120 will typically involve an inner iteration loop, as indicated by dotted line 135. The first updated subsurface attribute model 130 has several advantages as a starting point for further model generation relative to conventional practice. Among these are that it includes the low-frequency portion of the subsurface attribute model and that the true source signature is known and was used in its generation. Both of these arise from the nature of the seismic data 125.

The first updated subsurface attribute model 130 is then used as the starting point for the second stage of the presently disclosed process. The second stage performs (at 210, Figure 2) a second FWI 140 on the first updated subsurface attribute model 130 using a narrowband sweeping known source signature and swept seismic data 145 to generate a second updated subsurface attribute model 150. The second updated subsurface attribute model 150 may model either an isotropic or an anisotropic attribute. Again, for each dataset the second FWI 140 is typically an iterative process, as indicated by the dashed line 155. The second FWI 140 may be the same kind of inversion (time-domain or frequency-domain) as the first FWI 120 or may be different depending on the embodiment.

The seismic data 145 is similar to the seismic data 125 in that its source signature is known. This particular embodiment therefore also omits true source signature determination in this FWI. However, the seismic data 145 differs from the seismic data 125 in that it was acquired by sweeping rather than humming. Sweeping typically involves acquisition using a non-impulsive controlled-frequency source that starts producing sound at one frequency and then smoothly transitions to a second frequency before stopping. Typically the device would then reset, pause, and then begin a new sweep. Consecutive sweeps may be identical (the usual case) or different. The sweep may be either up (the usual case) or down in frequency. In the illustrated embodiment, the starting and ending frequencies typically will differ by up to two octaves, but sweeps over narrower frequency ranges are also possible. Alternative embodiments may sweep across up to three octaves. In an embodiment, the low-frequency, narrowband sweeping known source-signature data are acquired at between about 1.5 Hz and about 6 Hz.

Swept seismic data can be classed in at least two types. One is "narrowband sweeping", in which acquisition uses sweeps covering a frequency range of two octaves or less. A second is "broadband sweeping", which is acquisition using sweeps covering a frequency range of more than two octaves. Conventional vibroseis-style acquisition, as is well known in the art, uses broadband sweeping. The presently disclosed technique, however, uses narrowband sweeping. One narrowband swept acquisition technique suitable for obtaining data used the present technique is disclosed in U.S. Application Serial No. 13/327,524.

Those in the art will appreciate that seismic data acquisition occurs in seismic surveys that are sometimes classified by the environment in which they are performed. One type of acquisition is known as "marine" seismic surveying, which occurs in aquatic environments including not only saltwater, but also fresh and brackish water. A second type is known as "land based" or "land" surveying and occurs on land. The third kind may be called a "transition zone" survey, which occurs in environments partially on land and partially on water. The presently disclosed technique is not limited by whether the seismic data 125, 145 are acquired using a marine, land based, or transitional zone survey. The seismic data 125, 145 may be acquired using any such type of survey.

Those in the art will appreciate that seismic data itself is sometimes described as one-dimensional ("1D"), two-dimensional ("2D"), or three-dimensional ("3D") depending on the design of the apparatus by which the seismic data are acquired. (The design affects the subterranean coverage of the survey so that it is, for example, 1D, 2D, or 3D.) There is also a four-dimensional ("4D") seismic data type in which 3D data are taken in at least two different surveys separated in time, time being the fourth dimension. The embodiments illustrated herein are applied to 3D data but the disclosed technique is equally applicable to 1D, 2D, and 4D seismic data.

Note that the seismic data 125, 145 and the first and second updated subsurface attribute models 130, 150 are collections of ordered data representative of a tangible, real world, natural environment. This includes tangible, real world objects that comprise that environment. The seismic data 125, 145 and the first and second updated subsurface attribute models 130, 150 may, or may not be, rendered for human perception either by electronic display or by hard copy reduction depending upon the particular embodiment being implemented. The disclosed technique is indifferent as to whether such a rendering occurs. The seismic data 125, 145 and the first and second updated subsurface attribute models 130, 150 in the illustrated embodiments are not rendered but are instead analyzed without rendering.

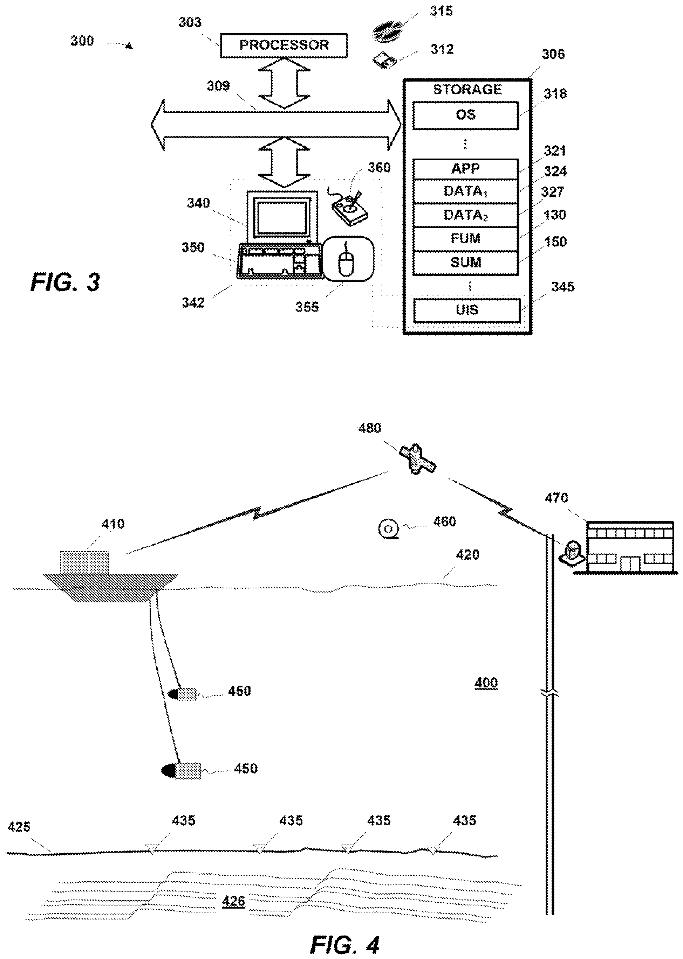

Those in the art having the benefit of this disclosure will also appreciate that the aspect of the presently disclosed technique described above is computer-implemented. Figure 3 conceptually depicts selected portions of the hardware and software architecture of a computing apparatus 300 such as may be employed in some aspects of the present invention. The computing apparatus 300 includes a processor 303 communicating with storage 306 over a communication medium 309.

The processor 303 may be any suitable processor or processor set known to the art. Those in the art will appreciate that some types of processors will be preferred in various embodiments depending on familiar implementation-specific details. Factors such as processing power, speed, cost, and power consumption are commonly encountered in the design process and will be highly implementation specific. Because of their ubiquity in the art, such factors will be easily reconciled by those skilled in the art having the benefit of this disclosure. Those in the art having the benefit of this disclosure will therefore appreciate that the processor 303 may theoretically be an electronic micro-controller, an electronic controller, an electronic microprocessor, an electronic processor set, or an appropriately programmed application specific integrated circuit ("ASIC"), field programmable gate array ("FPGA"), or graphical processing units ("GPUs"). Some embodiments may even use some combination of these processor types.

However, those in the art will also appreciate data sets such as the seismic data 125, 145 are quite voluminous and that the processing described herein is computationally intensive. Typical implementations for the processor 303 therefore actually constitute multiple electronic processor sets spread across multiple computing apparatuses working in concert. One such embodiment is discussed below. These considerations affect the implementation of the storage 306 and the communication medium 309 similarly.

The storage 306 may include a hard disk and/or random access memory ("RAM") and/or removable storage such as a floppy magnetic disk 312 and an optical disk 315. The storage 306 is encoded with a number of software components. These components include an operating system ("OS") 318; an application 321; data structures 324, 327 including the seismic data 125 ("DATA$_1$"), 145 ("DATA$_2$"); and the first ("FUM") and second ("SUM") updated subsurface attribute models 130, 150. The storage 306 may be distributed across multiple computing apparatuses as described above.

As with the processor 303, implementation-specific design constraints may influence the design of the storage 306 in any particular embodiment. For example, as noted above, the disclosed technique operates on voluminous data sets which will typically mitigate for various types of "mass" storage such as a redundant array of independent disks ("RAID"). Other types of mass storage are known to the art and may also be used in addition to or in lieu of a RAID. As with the processor 303, these kinds of factors are commonplace in the design process and those skilled in the art having the benefit of this disclosure will be able to readily balance them in light of their implementation specific design constraints.

The processor 303 operates under the control of the OS 318 and executes the application 321 over the communication medium 309. This process may be initiated automatically, for example upon startup, or upon user command. User command may be directly through a user interface. To that end, the computing system 300 of the illustrated embodiment also employs a user interface 342.

The user interface 342 includes user interface software ("UIS") 345 and a display 340. It may also include peripheral input/output ("I/O") devices such as a keypad or keyboard 350, a mouse 355, or a joystick 360. These will be implementation-specific details that are not germane to the presently disclosed technique. For example, some embodiments may forego peripheral I/O devices if the display 340 includes a touch screen. Accordingly, the presently disclosed technique admits wide variation in this aspect of the computing system 300 and any conventional implementation known to the art may be used.

Furthermore, there is no requirement that the functionality of the computing system 300 described above be implemented as disclosed. For example, the application 321 may be implemented in some other kind of software component, such as a daemon or utility. The functionality of the application 321 need not be aggregated into a single component and may be distributed across two or more components. Similarly, the data structures 324, 327 may be implemented using any suitable data structure known to the art.

As with the processor 303 and the storage 306, the implementation of the communications medium 309 will vary with the implementation. If the computing system 300 is deployed on a single computing apparatus, the communications medium 309 may be, for example, the bus system of that single computing apparatus. Or, if the computing system 300 is implemented across a plurality of networked computing apparatuses, then the communications medium 309 may include a wired or wireless link between the computing apparatuses. Thus, the implementation of the communications medium 309 will be highly dependent on the particular embodiment in ways that will be apparent to those skilled in the art having the benefit of this disclosure.

Some portions of the detailed descriptions herein are presented in terms of a software implemented process involving symbolic representations of operations on data bits within memory in a computing system or a computing device. These descriptions and representations are the means used by those in the art to most effectively convey the substance of their work to others skilled in the art. The process and operation require physical manipulations of physical quantities that will physically transform the particular machine or system on which the manipulations are performed or on which the results are stored. Usually, though not necessarily, these quantities take the form of electrical, magnetic, or optical signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated or otherwise as may be apparent, throughout the present disclosure, these descriptions refer to the action and processes of an electronic device, that manipulates and transforms data represented as physical (electronic, magnetic, or optical) quantities within some electronic device's storage into other data similarly represented as physical quantities within the storage, or in transmission or display devices. Exemplary of the terms denoting such a description are, without limitation, the terms "processing," "computing," "calculating," "determining," "displaying," and the like.

Furthermore, the execution of the software's functionality transforms the computing apparatus on which it is performed. For example, acquisition of data will physically alter the content of the storage, as will subsequent processing of that data. The physical alteration is a "physical transformation" in that it changes the physical state of the storage for the computing apparatus.

Note also that the software implemented aspects of the invention are typically encoded on some form of program storage medium or, alternatively, implemented over some type of transmission medium. The program storage medium may be magnetic (e.g., a floppy disk or a hard drive) or optical (e.g., a compact disk read only memory, or "CD ROM"), and may be read only or random access. Similarly, the transmission medium may be twisted wire pairs, coaxial cable, optical fiber, or some other suitable transmission medium known to the art. The invention is not limited by these aspects of any given implementation.

Those in the art will appreciate that the two stage process for generating a seismic subsurface attribute model is a part of a larger process stretching from acquisition of the seismic data 125, 145 through its preprocessing and processing to the analysis of the processed data. To further an understanding of the presently disclosed technique, the two stage process for generating a seismic subsurface attribute model will now be disclosed in an embodiment in which it is in fact just such a part of a larger process. Note, however, that in the discussion of the processing below, synthetic data rather than real world data are used.

As mentioned above, one suitable acquisition technique is disclosed in U.S. Application Serial No. 13/327,524. Portions of that application will now be reproduced with some modification in order to further an understanding of this technique. One such modification is the substitution of the term "humming" as set forth above for the terms "monochromatic" and "near monochromatic". However, other acquisition techniques may be employed in other embodiments provided they result in the acquisition of humming and or narrowband sweeping seismic data such as is described above.

Figure 4 illustrates a marine acquisition geometry suitable for implementing the instant invention. In some embodiments, a seismic survey will be conducted in the ocean 400 over a subsurface target of geological interest 426 which lies beneath the seafloor 425. A vessel 410 floats on the ocean surface 420. In the survey system, the vessel 410 may tow one or more low-frequency humming and/or narrowband sweeping sources 450, each of which will contain a receiver or sensor (not shown) that will record the wavefield emitted by that source. These comprise the "narrowband, low-frequency" portion of one embodiment of the instant survey system.

In one particular embodiment, the humming or narrowband source is implemented using the source disclosed and claimed in U.S. Letters Patent 8,387,744. However, the technique is not limited to acquisition with this particular source. Alternative embodiments may utilize other sources so long as they are capable of use in acquiring humming and narrowband swept data as described above.

The low-frequency sources 450 are shown towed at deeper depths; in some embodiments each will be towed at a depth appropriate for its frequency range, such that the surface ghost reflection maximally enhances the downward-propagating signal. Thus, the deeper the depth of tow, the lower the frequency of the humming or narrowband swept source. See, for example, U.S. Application Serial No. 12/291,221 or U.S. Letters Patent 7,257,049, which discuss the relationship between depth and frequency of acquisition. For some types of sources, the available frequency range shifts upwards with increasing depth, for example because an increase in water pressure raises the resonant frequency of the source. Thus, in other embodiments the lower-frequency sources will be towed at shallower depths, despite the attenuation from the surface ghost reflection that this may cause.

Many variations of this acquisition system are possible and well within the ability of one of ordinary skill in the art to devise. The instant survey system could acquire 2D, 3D, or 4D data. Variations in the design of the spread or the number of vessels will also be readily appreciated by those skilled in the art having the benefit of this disclosure. The low-frequency narrowband survey could be performed at the same time as the conventional, higher-frequency broadband survey, or in a separate pass, or in multiple separate passes. Alternatively, a low-frequency narrowband survey could be used to supplement a previously acquired conventional higher-frequency broadband survey such that the original data are reprocessed with the additional low-frequency data, or a low-frequency narrowband survey could be acquired first, and a conventional higher-frequency broadband survey later.

The low-frequency sources 450 could operate continuously. The low-frequency sources could each operate at a single frequency or cycle between two or more discrete frequencies ("humming" low-frequency sources), or sweep over a narrowband range of low frequencies designed to augment the frequency range produced by the broadband sources ("narrowband sweeping" low-frequency sources). The sources could operate to produce waves of constant amplitude, or the amplitude of the waves could vary (taper up and down).

The one or more low-frequency humming datasets, one or more narrowband sweeping datasets, and conventional broadband datasets may be acquired in any order. In particular, they may be acquired sequentially, or interleaved by shot lines, or interleaved within a shot line, or acquired simultaneously and separated using any of the standard techniques known in the art, or in any combination of these. One or more of the datasets may be "legacy" data, acquired previously for other purposes.

Note that, for purposes of illustration only, the discussion herein is primarily directed toward the design of a marine survey. That being said, those of ordinary skill in the art having the benefit of this disclosure will readily understand how the instant approach might be modified for a survey to be taken on land or in a transition zone.

The principles of conventional survey design with airguns are well established and will not be discussed here. Full-waveform inversion is generally described in terms of inverting data for a narrow range of frequencies, or over a set of discrete frequencies, from low frequency to high frequency. One algorithm for selecting frequencies is given in Sirgue & Pratt (2004). This reference suggests frequencies should be selected that are separated by a ratio of about 2 for this survey geometry. In one approach, a theoretically optimal ratio between successive frequencies can be shown to be equal to:

$$\frac{1}{\alpha_{min}} = \sqrt{1 + \left(\frac{o}{2d}\right)^2}$$

where o is the maximum offset and d is the depth of the target of interest. So, for example, consider a maximum offset of 20 kilometers and a target depth of interest of 6 kilometers. Then:

$$\frac{1}{\alpha_{min}} = \sqrt{\frac{34}{9}} \cong 1.94$$

So, starting from 1.4 Hz and following the prescription identified above, the next frequency would be 2.72 Hz, followed by 5.28 Hz etc. The last frequency is likely within the range available from conventional sources such as airguns, so in this case only 2 frequencies would be used from a controlled-frequency source: 1.4 and 2.72 Hz. In this example the next frequency would be 5.28 Hz, but that frequency will be available from the data collected using the conventional broadband sources, so a low-frequency source may not be used to acquire data of that frequency. In practice it might be desirable to be a bit conservative and acquire more frequencies below those available from airguns, but this example still illustrates that only a few frequencies may be needed for realistic examples.

Thus in the instant example, two or more humming sources may be used, operating at 1.4 and 2.72 Hz, respectively. In other embodiments, a single source simultaneously humming at a fundamental and a second harmonic, 1.4 and 2.8 Hz, might be used, or a single source might alternate back and forth between 1.4 and 2.72 Hz. Returning to Figure 1-Figure 2, these two humming seismic datasets would each be used in Stage 1 of the process, in successive order of increasing frequency (at 205), with the updated subsurface attribute model from the first FWI of the 1.4 Hz data being used as the initial subsurface attribute model for the FWI of the 2.72 Hz data.

The previous paragraphs describe humming acquisition. Narrowband sweeping acquisition is closer to conventional controlled-source acquisition, the primary difference being that in narrowband sweeping acquisition we do not attempt to sweep over a sufficient bandwidth to make an interpretable seismic image from the resulting data. The data are instead optimized to provide a sufficient signal-to-noise ratio for full-waveform inversion. So, for example, we might sweep over 2-8 Hz, two octaves. The minimum acceptable bandwidth for an interpretable image is about 3 octaves.

It may further be desirable to choose to perturb the frequencies of the humming sources to prevent unwanted interference of harmonics between the seismic sources. For example, if the theory suggests that sources emitting waves 1.0 and 2.0 Hz should be employed, it might be preferred instead to use 0.9 and 2.1 Hz, to avoid having one source frequency conflict with the second harmonic of the other. Optionally the harmonic or subharmonic output of a humming or narrowband source might be enhanced and use made of the harmonics or subharmonics as additional humming sources. So, for example, one source might simultaneously generate waves having frequencies of 1.4 and 2.8 Hz.

In this particular embodiment, a joint survey is conducted although some embodiments may separate the broadband and low-frequency, narrowband surveys. The conventional survey may proceed in accordance with conventional practice. If the airguns emit acoustic energy with a detectable intensity at, for example, 2.8 Hz, the highest of the low-frequency sources, it might be desirable to slightly modify the timing of each shot so that the 2.8 Hz wave component of the airgun signal is timed to be in-phase with the waves produced by the 2.8 Hz low-frequency source(s). Note at most this would require delaying or advancing the shot timing by 1.4 seconds. Alternatively, the vessel speed could be adjusted so that the airguns reach their shot locations just at the desired point in the humming source's cycling. Note the energy of the acoustic signal produced from airguns rapidly falls off at lower frequencies, so any unwanted interference will be much reduced for any lower low-frequency sources.

The narrowband low-frequency sources may operate independently or simultaneously. The narrowband low-frequency sources may operate continuously or discontinuously. Each narrowband low-frequency source records the signal it is radiating, and this information will be used when performing the full-waveform inversion. The receivers could be recording continuously. The locations of all sources and receivers will, in some embodiments, also be recorded continuously.

Turning now from the acquisition and the excerpted material, the humming and narrowband swept data are recorded during acquisition and transported to a computing facility in conventional fashion. This typically includes recording the seismic data on some kind of electromagnetic medium, such as a magnetic tape 460 or a digital memory (not shown). The magnetic tape 460 may be transported by ground transportation (not shown), for example, to a computing facility 470. Or, the seismic data may be transmitted by satellite 480.

The computing facility 470 typically houses a more powerful computing system than what may be found on the vessel 410. The *situs* of the processing described herein is immaterial. In theory, the processing may be performed on the vessel 410 or, for that matter, anywhere else. However, the processing is computationally intensive and so more powerful computing systems than are typically found on survey vessels are generally desirable.

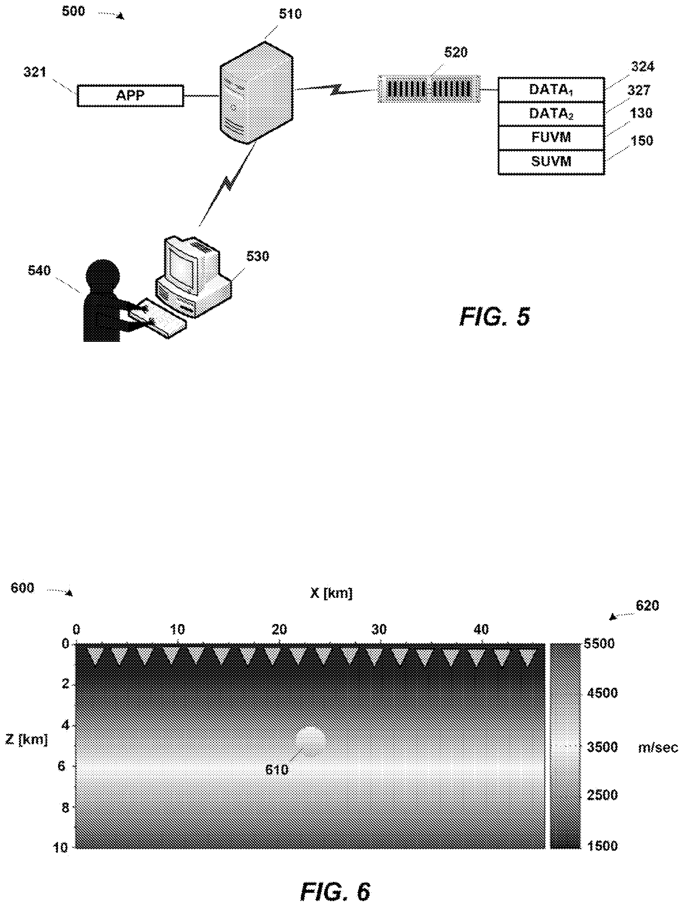

A portion of an exemplary computing system 500 is shown in Figure 5. The computing system 500 is networked, but there is no requirement that the computing system 500 be networked. Alternative embodiments may employ, for instance, a peer-to-peer architecture or some hybrid of a peer-to-peer and client/server architecture. The size and geographic scope of the computing system 500 is not material to the practice of the invention. The size and scope may range anywhere from just a few machines of a Local Area Network ("LAN") located in the same room to many hundreds or thousands of machines globally distributed in an enterprise computing system.

The computing system 500 comprises, in the illustrated portion, a server 510, a mass storage device 520, and a workstation 530. Each of these components may be implemented in their hardware in conventional fashion. Alternative embodiments may also vary in the computing apparatuses used to implement the computing system 500. Those in the art will furthermore appreciate that the computing system 500, and even that portion of it that is shown, will be much more complex. However, such detail is conventional and shall not be shown or discussed to avoid obscuring the subject matter claimed below.

In Figure 5, the application 321 is shown residing on the server 510 while the data structures 324, 327 for the seismic data 125, 145, and the subsurface attribute models 130, 150 are shown residing in the mass storage 520. While this is one way to locate the various software components, the technique is not dependent upon such an arrangement. Although performance concerns may mitigate for certain locations in particular embodiments, the *situs* of the software components is otherwise immaterial.

The operation of this particular embodiment will be illustrated in the context of synthetic data. The synthetic data are derived from the 2D synthetic model 600 of a geological formation shown in Figure 6. The model is indexed by distance ($X$) measured in meters across the horizontal (x) axis and by depth ($Z$) in meters along the vertical (y) axis. Note the circular inhomogeneity in the center. The velocity bar 620 is shown to the right in accordance with conventional practice.

The elliptical, high-velocity anomaly 610 is 1500 m thick, centered at a depth of 5000 m, embedded in a 1D background velocity gradient that increases from a constant 1500 m/s in a water layer at the top of the model to 5500 m/s at the base. The model is discretized on a grid with Dx = Dz = 100 m, and spans a distance of 46 100 m laterally and 10 000 m vertically. The 18 triangles across the top indicate the approximate acquisition geometry of the experiment, simulating 422 ocean bottom receivers regularly spaced every 100 m over the model, located at a depth of 1500 m. The sources were simulated every 100 m, towed at a depth of 30 m below the top of the model.

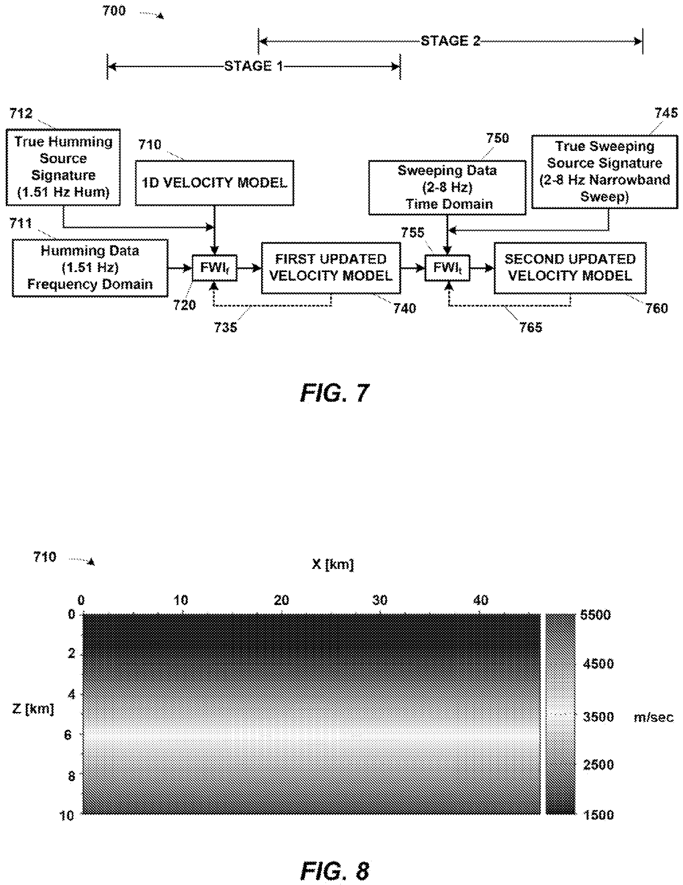

The user 540 invokes the application 321 from the workstation 530 to perform the particular workflow 700 shown in Figure 7. Those in the art will appreciate that the seismic data 125, 145 may undergo pre-processing to condition the data for the processing that is to come. Such pre-processing is described in, for example, U.S. Letters Patent 7,725,266 and U.S. Application Serial No. 13/327,524. The type and amount of pre-processing will vary by embodiment in a manner that will become apparent to those skilled in the art having the benefit of this disclosure.

The first stage begins with a 1D velocity model 710 upon which, for the true low-frequency humming source-signature data 712, recorded by or near the source, and the humming data 711, recorded at the receivers, the workflow 700 begins by performing the full waveform inversion 720 in the frequency-domain ("FWI$_f$") for a number of discrete frequencies. In the illustrated embodiment, the humming data 711 are acquired with a frequency of less than about 2 Hz-i.e., 1.51 Hz. By using known-source humming data 711 at these low-frequencies, one of the problems associated with FWI is solved and another mitigated: the source signature 712 is known, and the starting velocity model does not have to be extremely accurate due to the presence of low-frequency data to mitigate the nonlinearity of the inverse problem.

The initial velocity model 710 is first derived through some other method. It may be a legacy model or it may be derived expressly for purposes of performing the disclosed technique. This "other" method by which it is derived will typically be reflection tomography, though it could even be as simple as a 1D velocity gradient. The initial velocity model 710 in the illustrated embodiment is shown in Figure 8 and is a 1D velocity model.

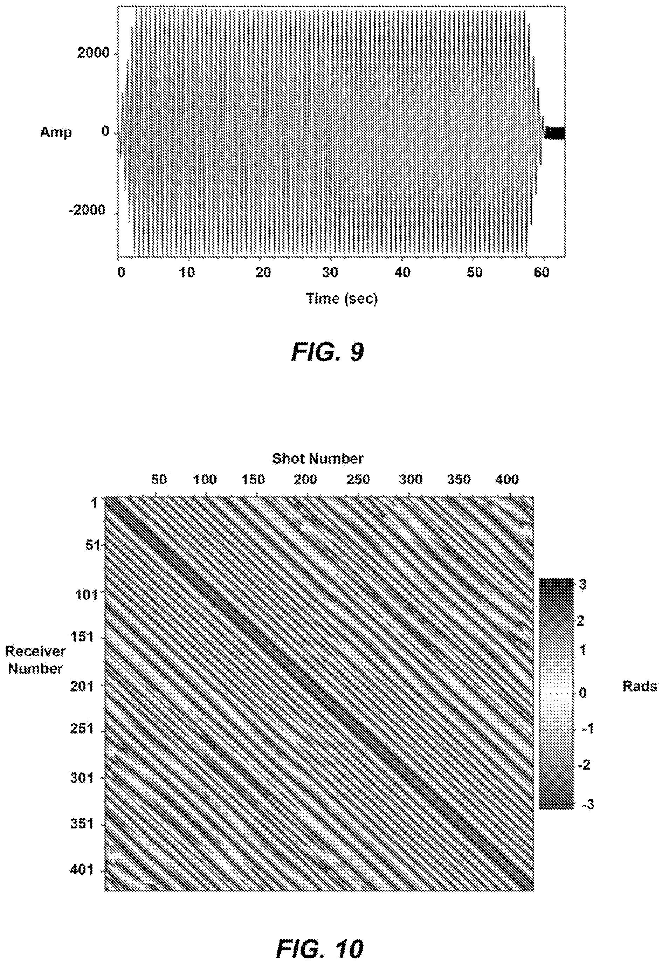

The seismic data by which the initial velocity model 710 is updated as described above are generated by a device operating in a monofrequency "humming" mode, generating a known source signature for a small number (<< 10) of low-frequencies. The source signature for a synthetic set of humming data generated from the synthetic model 600 in Figure 6 at a frequency of 1.51 Hz is shown in Figure 9. Figure 10 shows the phase of the humming data generated in the true velocity model of Figure 6 for all sources and receivers. Note the elliptical shape of the phase patterns near the center of the figure - this is due to the presence of the elliptical velocity anomaly 610, and represents the data that the full waveform inversion is trying to match.

Synthetic data were calculated in this model using both a 1.51Hz "humming" sweep and as discussed below a narrowband sweeping source containing frequencies from 2 to 8Hz. Data were modeled using the pseudo-analytic approximation to the acoustic wave-equation, as described by J.T. Etgen & S. Brandberg-Dahl, "The Pseudo-Analytical Method: Application of Pseudo-Laplacians to Acoustic and Acoustic Anisotropic Wave Propagation", 79nd Annual International Meeting, SEG, Expanded Abstracts, 2552-2556 (2009) and U.S. Letters Patent 8,296,069 issued October 23, 2012. The data were modeled using a free-surface boundary condition, and recorded for a maximum time of 65 s. Data were also modeled with the narrowband sweeping source and recorded for a maximum time of 56 s.

The FWI$_f$ 720 is performed using the technique disclosed in U.S. Letters Patent 7,725,266, which is similar to that in Sirgue & Pratt (2004). This technique employs a multi-scale approach. That is, it decomposes the seismic data 125 by scale - with the larger scale data, typically represented by the lower data frequencies - being much easier to match in the non-linear, iterative inverse problem of updating a velocity model. The technique gradually matches different components of the seismic data 125 - moving from easiest to hardest, largest to smallest, gradually increasing the resolution of our seismic velocity models.

Using the starting velocity model 710, and seismic data 711 of a single, low-frequency, as described above, the workflow 700 runs multiple iterations 735 of frequency-domain waveform inversion ("FWI$_f$") 720 to update the velocity model 710. Typically, the number of frequencies ranges from 1 to less than 10. In the illustrated embodiment, this FWI$_f$ 720 is performed using the time-domain finite-difference forward modeling disclosed in U.S. Letter Patent 7,725,266.

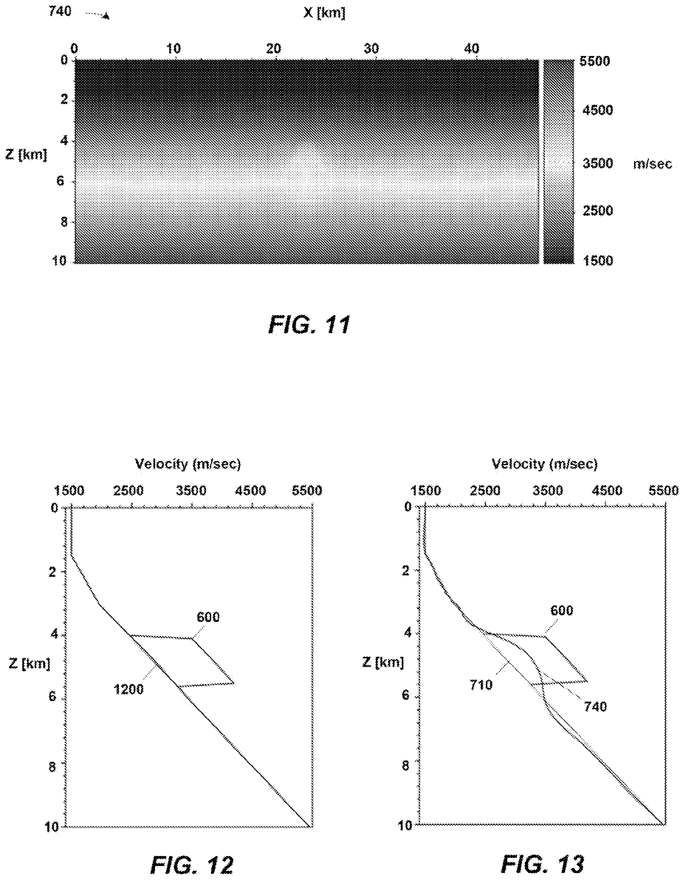

The first updated velocity model 740 for this particular embodiment is shown in Figure 11 upon completion of the iterations 735. The first stage of the processing flow described above operates in the frequency-domain. In this particular embodiment, FWI$_f$ is parameterized to invert for only the phase of the monofrequency, or humming, data. Figure 11 is the result after 10 iterations of FWI$_f$. Although there is some variation in the 1D background velocity model, which is not expected to change very much, the FWI$_f$ result has succeeded in recovering a low-frequency estimate of the elliptical velocity anomaly in the center of the model. In other embodiments, the updated model 740 would then be used as the initial model 710 for additional FWI$_f$ 720 of several other (<< 10) low-frequency humming source signatures 712 and low-frequency humming data 711.

The result from the first stage of the processing flow just described is further illustrated by Figure 12 and Figure 13, which present a 1D slice through the velocity model at X = 23.0 km, approximately through the center of both the model and the anomaly. In Figure 12, the true model 600 and the result 1200 after one iteration of FWI$_f$ is shown. The starting model 710 mirrors the result 1200 and so is not separately shown. In Figure 13, result 740 after 10 iterations of FWI$_f$, (representing a low-pass filtered version of the true model 600), the true model 600, and the starting model 710 are shown. Frequency-domain waveform inversion of "humming" data at a low-frequency (< 4 Hz) has allowed FWI$_f$ to recover a velocity model which, while not exactly the true model, would not have been recoverable from the same starting model if data of a higher temporal frequency were used (i.e., > 5Hz, typical of airgun seismic data).

At this point the illustrated embodiment of the disclosed technique departs from conventional practice that would employ further iterations of the FWI$_f$ 720, extracting from conventional data the discrete frequencies of interest. Here, as in the first stage, the presently disclosed technique further exploits the attribute of the data as described above in which the output source signature is known. Using a low-frequency, narrowband sweeping, known source-signature, and swept seismic data, this particular embodiment performs a further full-waveform inversion in the time-domain, iteratively updating the velocity model without having to invert for the source signature.

Waveform inversion in the time-domain (i.e., "FWI$t$") is essentially inverting for multiple frequencies simultaneously, as described by A. Brenders, A., et al., "Comparison of 3D Time- and Frequency-Domain Waveform Inversion: Benefits and Insights of a Broadband, Discrete-Frequency Strategy", SEG Technical Program Expanded Abstracts 2012: pp. 1-5 (2012) ("Brenders, et al."). However, waveform inversion in the time-domain still requires starting velocity models which avoid the local minima associated with our non-linear inverse problem. Using "humming" data to create a starting model by FWI$_f$ implicitly implements a multi-scale strategy to mitigate the aforementioned nonlinearity. Incorporating the measured source signature into the processing eliminates one of the key difficulties in implementing FWI$_t$ in that it eliminates the need to estimate the source signature of the data.

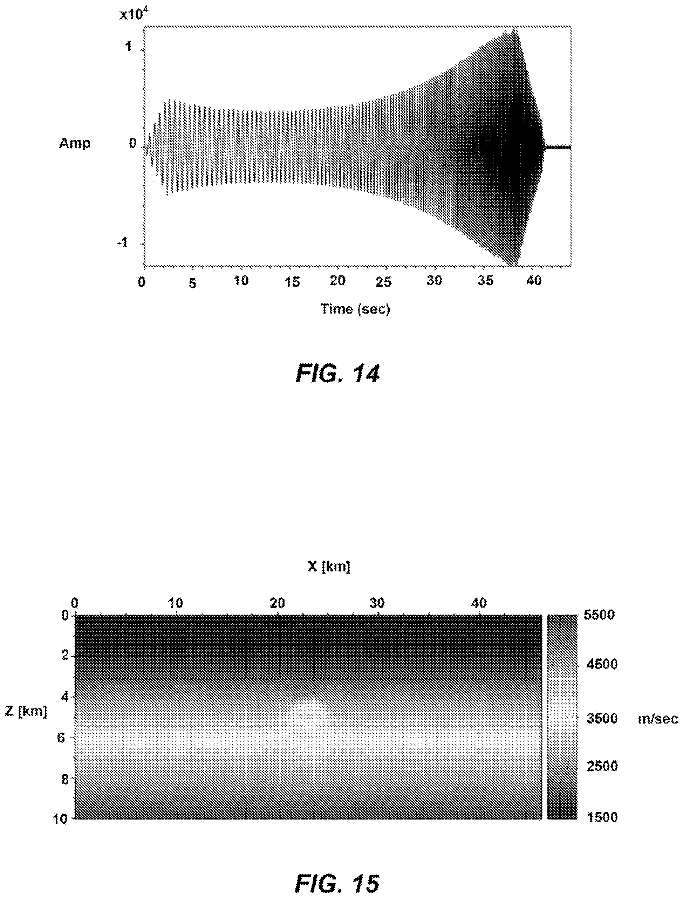

Returning to Figure 7, the first updated velocity model 740 is then used to perform the second stage processing. The second dataset 750 is narrowband sweeping data acquired at frequencies from, for example, 2 Hz to 8Hz, recorded in the time domain. The source signature 745 for the data used in this particular embodiment is shown in Figure 14. The time-domain, narrowband sweeping data 750 recorded at the receivers along with its measured source signature 745 are then used with the first updated velocity model 740 through FWI 755 to generate the second updated velocity model 760 over a number of iterations 765.

The FWI 755 can be performed as described in Brenders et al. However, the technique is not so limited and other FWI techniques known to the art may be used. Other suitable techniques include A. Pica, et al., "Nonlinear Inversion of Seismic Reflection Data in a Laterally Invariant Medium", 55 Geophysics 284-292 (1990); R.M. Shipp & S. C. Singh, "Two-Dimensional Full Wavefield Inversion of Wide-Aperture Marine Seismic Streamer Data: 151 Geophys. J. Int. 325-344 (2002).

The second updated velocity model 760 resulting from the FWI, 755 after seven iterations 765 is shown in Figure 15. The variation in the 1D background velocity model has been mostly "healed" by the inversion, and the elliptical velocity anomaly at the center of the model has been better recovered, especially at the top and lateral edges. The "sharpening" of the velocity anomaly is an effect of the FWI procedure. The FWI effectively inverts for a limited bandwidth of frequencies simultaneously, and by adding all of these frequencies to the inverted velocity model, the technique smooths out the "ringing" effect in the velocity model which is representative of the single-frequency approach used by our frequency-domain waveform inversion algorithm, as described by U.S. Letter Patent 7,725,266.

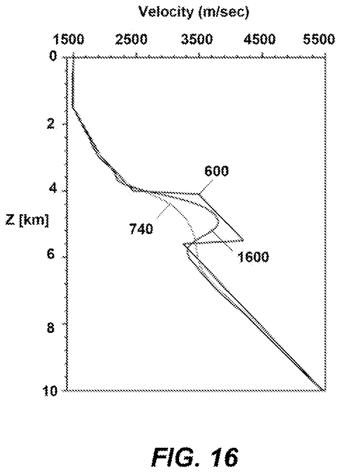

The result from the second stage is shown in Figure 16. This presents a 1D slice through the velocity model at X = 23.0km, approximately through the center of both the model and the anomaly. In Figure 16, the true model 600, the first updated velocity model 740 (the result after ten iterations of FWI$_f$), and the result 1600 after ten iterations of FWI$_t$, the second updated model, are shown. The time-domain waveform inversion has both resulted in a more accurate recovery of both the top and bottom edge of the anomaly, as well as the total magnitude (value) of the velocity model itself. This velocity model, while not necessarily appropriate for imaging (i.e., migration) of seismic data acquired with airguns, represents a much better starting model for further velocity analysis, whether by additional waveform inversion of higher frequency (i.e., airgun) data, or by standard methods of velocity model building for high-velocity anomalies.

The technique disclosed herein addresses one of the uncertainties in applying FWI with standard seismic data in conventional practice-that the seismic source signature is an unknown variable. As an unknown variable, it must be solved for as part of the inverse problem in conventional practice. In addition, both the source and seismic data do not typically contain sufficient low-frequencies (< 4Hz) for FWI to succeed without a good knowledge, *a priori,* of the subsurface velocity model. When applying FWI with low-frequency, known source seismic data as described above, these problems can be overcome or at least mitigated.

Furthermore, as mentioned above, the FWI 755 in Figure 7 is essentially inverting for a wider band of frequencies simultaneously, as described in Brenders et al. This is true because (1) the low-frequency portion of the velocity model has already been recovered by using FWI$_f$ with "humming" data, and (2) the true source signature used to generate our seismic data is known. By iteratively updating the velocity model without having to invert for the source signature, and due to the quality and accuracy of the starting model coming from first stage of the processing flow, this technique recovers velocity models with both low-wavenumber and high-wavenumber information simultaneously.

U.S. Application Serial No. 13/327,524, entitled, "Seismic Acquisition Using Narrowband Seismic Sources", filed December 15, 2011, in the name of the inventors Joseph A. Dellinger et al., published June 21, 2012, as U.S. Patent Publication 2012/155217, and commonly assigned herewith for its teachings regarding data acquisition located at ¶¶[0024]-[0040], [0054]-[0059], [0065]-[0088].

U.S. Letters Patent 7,725,266, entitled, "System and Method for 3D Frequency Domain Waveform Inversion Based on 3D Time-Domain Forward Modeling", and issued May 25, 2010, to BP Corporation North America Inc., as assignee of the inventors Laurent Sirgue et al., for its teaching regarding the full waveform inversion technique at column 7, line 64 to column 13, line 50, with reference to Figures 3-5.

U.S. Letters Patent 8,387,744, entitled, "Marine Seismic Source", and issued March 5, 2013, to BP Corporation North America Inc., as assignee of the inventors Mark Harper et al., for its teaching regarding the design and operation of a humming and narrowband seismic source at column 5, line 62 to col. 12, lines 46.

A. Brenders, et al., "Comparison of 3D Time- and Frequency-Domain Waveform Inversion: Benefits and Insights of a Broadband, Discrete-Frequency Strategy", SEG Technical Program Expanded Abstracts 2012: pp. 1-5 (2012).

L. Sirgue & R.G. Pratt, "Efficient Waveform Inversion and Imaging: A Strategy for Selecting Temporal Frequencies", 69 Geophysics 231 (2004), for its teachings regarding full waveform inversion and, in particular, frequency selection found at pages 232-246.

A. Pica, et al., "Nonlinear Inversion of Seismic Reflection Data in a Laterally Invariant Medium", 55 Geophysics 284-292 (1990).

R.M. Shipp & S. C. Singh, "Two-Dimensional Full Wavefield Inversion of Wide-Aperture Marine Seismic Streamer Data: 151 Geophys. J. Int. 325-344 (2002).

**Claims**

1. A computer-implemented process (100), comprising:

    performing (200) a first full waveform inversion on an initial subsurface attribute model using low frequency, known source-signature data and low frequency humming seismic data to generate a first updated subsurface attribute model; and
    performing (210) a second full waveform inversion on the first updated subsurface attribute model using low-frequency, narrowband sweeping known source-signature data and low-frequency, swept seismic data to generate a second updated subsurface attribute model.

2. The computer-implemented process of claim 1, wherein the first full waveform inversion comprises a frequency domain full waveform inversion.

3. The computer-implemented process of claim 2, wherein the frequency domain full waveform inversion includes time-domain finite-difference modeling.

4. The computer-implemented process of claim 2, wherein the second full waveform inversion comprises a time domain full waveform inversion.

5. The computer-implemented process of claim 1, wherein the second full waveform inversion comprises a time domain full waveform inversion.

6. The computer-implemented process of claim 1, wherein the low-frequency, humming seismic data includes data acquired at a seismic frequency of less than about 4 Hz.

7. The computer-implemented process of claim 6, wherein the low-frequency, humming seismic data includes data acquired at a seismic frequency of less than about 1.5 Hz.

8. The computer-implemented process of claim 1, wherein the low-frequency, known source signature, humming seismic data comprises less than 10 frequencies.

9. The computer-implemented process of claim 1, wherein the low-frequency, narrowband sweeping known source-signature data are acquired at between about 1.5 Hz and about 6 Hz.

10. The computer-implemented process of claim 1, wherein the first full waveform inversion omits true source signature determination and the second full waveform inversion omits true source signature determination.

11. The computer-implemented process of claim 1, wherein the first updated subsurface attribute model comprises recovered low-frequency information.

12. The computer-implemented process of claim 1, wherein the second updated subsurface attribute model comprises both low-wavenumber and high-wavenumber information.

13. The computer-implemented process of claim 1, wherein the low-frequency, known source signature, humming seismic data and the low-frequency, narrowband, known source signature, swept seismic data include common frequencies.

14. The computer-implemented process of claim 1, wherein performing the second full waveform inversion using low-frequency, narrowband sweeping known source-signature data includes performing the second full waveform inversion using the physical record of the low-frequency, narrowband sweeping known source-signature data.

15. The computer-implemented process of claim 1, wherein performing the second full waveform inversion using low-frequency, narrowband sweeping known source-signature data and low frequency humming seismic data includes performing the second full waveform inversion using a single complex-valued scalar, representing the phase and amplitude of the humming source.

**Patentansprüche**

1. Ein computerimplementierter Prozess (100), der Folgendes beinhaltet:

    Durchführen (200) einer ersten Vollwellenforminversion auf einem anfänglichen Untergrundattributsmodell unter Verwendung von niederfrequenten Daten mit bekannter Quellsignatur und niederfrequenten, brummenden, seismischen Daten, um ein erstes aktualisiertes Untergrundattributsmodell zu generieren; und Durchführen (210) einer zweiten Vollwellenforminversion auf dem ersten aktualisierten Untergrundattributsmodell unter Verwendung von niederfrequenten, schmalband-wobbelnden Daten mit bekannter Quellsignatur und niederfrequenten, gewobbelten, seismischen Daten, um ein zweites aktualisiertes Untergrundattributsmodell zu generieren.

2. Computerimplementierter Prozess gemäß Anspruch 1, wobei die erste Vollwellenforminversion eine Frequenzdomänen-Vollwellenforminversion beinhaltet.

3. Computerimplementierter Prozess gemäß Anspruch 2, wobei die Frequenzdomänen-Vollwellenforminversion Zeitdomänen-Finite-Differenzen-Modellierung umfasst.

4. Computerimplementierter Prozess gemäß Anspruch 2, wobei die zweite Vollwellenforminversion eine Zeitdomänen-Vollwellenforminversion beinhaltet.

5. Computerimplementierter Prozess gemäß Anspruch 1, wobei die zweite Vollwellenforminversion eine Zeitdomänen-Vollwellenforminversion beinhaltet.

6. Computerimplementierter Prozess gemäß Anspruch 1, wobei die niederfrequenten, brummenden, seismischen Daten Daten umfassen, die bei einer seismischen Frequenz von weniger als etwa 4 Hz erfasst werden.

7. Computerimplementierter Prozess gemäß Anspruch 6, wobei die niederfrequenten, brummenden, seismischen Daten Daten umfassen, die bei einer seismischen Frequenz von weniger als etwa 1,5 Hz erfasst werden.

8. Computerimplementierter Prozess gemäß Anspruch 1, wobei die niederfrequenten, brummenden, seismischen Daten mit bekannter Quellsignatur weniger als 10 Frequenzen umfassen.

9. Computerimplementierter Prozess gemäß Anspruch 1, wobei die niederfrequenten, schmalband-wobbelnden Daten mit bekannter Quellsignatur zwischen etwa 1,5 Hz und etwa 6 Hz erfasst werden.

10. Computerimplementierter Prozess gemäß Anspruch 1, wobei die erste Vollwellenforminversion wahre Quellsignaturbestimmung auslässt und die zweite Vollwellenforminversion wahre Quellsignaturbestimmung auslässt.

11. Computerimplementierter Prozess gemäß Anspruch 1, wobei das erste aktualisierte Untergrundattributsmodell zurückgewonnene niederfrequente Informationen beinhaltet.

12. Computerimplementierter Prozess gemäß Anspruch 1, wobei das zweite aktualisierte Untergrundattributsmodell sowohl Niedrig-Wellennummer-Information als auch Hoch-Wellennummer-Information beinhaltet.

13. Computerimplementierter Prozess gemäß Anspruch 1, wobei die niederfrequenten, brummenden, seismischen Daten mit bekannter Quellsignatur und die niederfrequenten, schmalbandgewobbelten, seismischen Daten mit bekannter Quellsignatur gemeinsame Frequenzen umfassen.

14. Computerimplementierter Prozess gemäß Anspruch 1, wobei das Durchführen der zweiten Vollwellenforminversion unter Verwendung von niederfrequenten, schmalband-wobbelnden Daten mit bekannter Quellsignatur das Durchführen der zweiten Vollwellenforminversion unter Verwendung der physischen Aufzeichnung der niederfrequenten, schmalband-wobbelnden Daten mit bekannter Quellsignatur umfasst.

15. Computerimplementierter Prozess gemäß Anspruch 1, wobei das Durchführen der zweiten Vollwellenforminversion unter Verwendung von niederfrequenten, schmalband-wobbelnden Daten mit bekannter Quellsignatur und niederfrequenten, brummenden, seismischen Daten das Durchführen der zweiten Vollwellenforminversion unter Verwendung eines einzelnen komplexwertigen Skalars, der die Phase und Amplitude der brummenden Quelle darstellt, umfasst.

## Revendications

1. Procédé mis en oeuvre par ordinateur (100), comprenant :

   la réalisation (200) d'une première inversion totale de forme d'onde sur un modèle d'attribut de sous-surface initial en utilisant des données de signature de source connue, basse fréquence et des données sismiques de bourdonnement basse fréquence pour générer un premier modèle d'attribut de sous-surface actualisé ; et la réalisation (210) d'une deuxième inversion totale de forme d'onde sur le premier modèle d'attribut de sous-surface actualisé en utilisant des données de signature de source connue à balayage de bande étroite, basse fréquence et des données sismiques balayées, basse fréquence pour générer un deuxième modèle d'attribut de sous-surface actualisé.

2. Procédé mis en oeuvre par ordinateur selon la revendication 1, dans lequel la première inversion de forme d'onde totale comprend une inversion de forme d'onde totale de domaine de fréquence.

3. Procédé mis en oeuvre par ordinateur selon la revendication 2, dans lequel l'inversion de forme d'onde totale de domaine de fréquence inclut une modélisation des différences finies dans le domaine temporel.

4. Procédé mis en oeuvre par ordinateur selon la revendication 2, dans lequel la deuxième inversion de forme d'onde totale comprend une inversion de forme d'onde totale de domaine temporel.

5. Procédé mis en oeuvre par ordinateur selon la revendication 1, dans lequel la deuxième inversion de forme d'onde totale comprend une inversion de forme d'onde totale de domaine temporel.

6. Procédé mis en oeuvre par ordinateur selon la revendication 1, dans lequel les données sismiques de bourdonnement, basse fréquence incluent des données acquises à une fréquence sismique de moins d'environ 4 Hz.

7. Procédé mis en oeuvre par ordinateur selon la revendication 6, dans lequel les données sismiques de bourdonnement, basse fréquence incluent des données acquises à une fréquence sismique de moins d'environ 1,5 Hz.

8. Procédé mis en oeuvre par ordinateur selon la revendication 1, dans lequel les données sismiques de bourdonnement, de signature de source connue, comprennent moins de 10 fréquences.

9. Procédé mis en oeuvre par ordinateur selon la revendication 1, dans lequel les données de signature de source connue à balayage de bande étroite, basse fréquence sont acquises à entre environ 1,5 Hz et environ 6 Hz.

10. Procédé mis en oeuvre par ordinateur selon la revendication 1, dans lequel la première inversion de forme d'onde totale omet la détermination d'une signature de source réelle et la seconde inversion de forme d'onde totale omet la détermination d'une signature de source réelle.

11. Procédé mis en oeuvre par ordinateur selon la revendication 1, dans lequel le premier modèle d'attribut de sous-surface actualisé comprend des informations basse fréquence récupérées.

12. Procédé mis en oeuvre par ordinateur selon la revendication 1, dans lequel le deuxième modèle d'attribut de sous-surface actualisé comprend à la fois des informations à faible nombre d'ondes et à nombre d'ondes élevé.

13. Procédé mis en oeuvre par ordinateur selon la revendication 1, dans lequel les données sismiques de bourdonnement, de signature de source connue, basse fréquence et les données sismiques balayées, de signature de source connue, de bande étroite, basse fréquence incluent des fréquences communes.

14. Procédé mis en oeuvre par ordinateur selon la revendication 1, dans lequel la réalisation de la deuxième inversion de forme d'onde totale en utilisant des données de signature de source connue à balayage de bande étroite, basse fréquence inclut la réalisation de la deuxième inversion de forme d'onde totale en utilisant l'enregistrement physique des données de signature de source connue à balayage de bande étroite, basse fréquence.

15. Procédé mis en oeuvre par ordinateur selon la revendication 1, dans lequel la réalisation de la deuxième inversion de forme d'onde totale en utilisant des données de signature de source connue à balayage de bande étroite, basse fréquence et des données sismiques de bourdonnement basse fréquence inclut la réalisation de la deuxième inversion de forme d'onde totale en utilisant une grandeur scalaire à va-

**EP 3 063 561 B1**

leur complexe unique, représentant la phase et l'amplitude de la source de bourdonnement.

100 ─→

|←──────────────────────────── STAGE 2 ────────────────────────────→|

|←──────────── STAGE 1 ────────────→|

110
┌─────────────────────┐
│ INITIAL SEISMIC     │
│ SUBSURFACE          │
│ ATTRIBUTE MODEL     │
└─────────────────────┘

145
┌──────────┐
│ DATA₂    │
└──────────┘

150

125                          130                                      ┌──────────────────────┐
┌──────────┐    ┌─────┐   ┌────────────────────┐   ┌─────┐           │ SECOND UPDATED       │
│ DATA₁    │──→ │ FWI │──→│ FIRST UPDATED      │──→│ FWI │──────────→ │ SEISMIC SUBSURFACE   │
└──────────┘    └─────┘   │ SEISMIC SUBSURFACE │   └─────┘           │ ATTRIBUTE MODEL      │
                          │ ATTRIBUTE MODEL    │                     └──────────────────────┘
         120              └────────────────────┘      140

         135                                           155

*FIG. 1*

100 ─→

205
┌──────────────────────┐
│ UPDATE THE UPDATED   │
│ SEISMIC SUBSURFACE   │
│ ATTRIBUTE MODEL WITH │
│ NEXT HUMMING SOURCE  │
│ SIGNATURE AND DATA   │
└──────────────────────┘

200
┌────────────────────────────┐
│ PERFORM A FIRST FULL       │
│ WAVEFORM INVERSION ON AN   │
│ INITIAL SEISMIC SUBSURFACE │
│ ATTRIBUTE MODEL USING LOW  │
│ FREQUENCY, KNOWN SOURCE    │
│ SIGNATURE DATA AND HUMMING │
│ SEISMIC DATA TO GENERATE A │
│ FIRST UPDATED SEISMIC      │
│ SUBSURFACE ATTRIBUTE MODEL │
└────────────────────────────┘

215
┌──────────────────────┐
│ UPDATE THE UPDATED   │
│ SEISMIC SUBSURFACE   │
│ ATTRIBUTE MODEL WITH │
│ NEXT NARROWBAND      │
│ SWEEPING SOURCE      │
│ SIGNATURE AND DATA   │
└──────────────────────┘

210
┌────────────────────────────┐
│ PERFORM A SECOND FULL WAVEFORM │
│ INVERSION ON THE FIRST UPDATED │
│ SEISMIC SUBSURFACE ATTRIBUTE   │
│ MODEL USING NARROWBAND, KNOWN  │
│ SOURCE SIGNATURE AND SWEPT     │
│ SEISMIC DATA TO GENERATE A     │
│ SECOND SEISMIC SUBSURFACE      │
│ ATTRIBUTE MODEL                │
└────────────────────────────┘

*FIG. 2*

FIG. 3

FIG. 4

**FIG. 5**

**FIG. 6**

700 ─────►

|◄────────────────────STAGE 2────────────────────►|

|◄──────────STAGE 1──────────►|

712
**True Humming Source Signature (1.51 Hz Hum)**

710
**1D VELOCITY MODEL**

750
**Sweeping Data (2-8 Hz) Time Domain**

745
**True Sweeping Source Signature (2-8 Hz Narrowband Sweep)**

711
**Humming Data (1.51 Hz) Frequency Domain**

720 FWI$_f$

740 **FIRST UPDATED VELOCITY MODEL**

755 FWI$_t$

760 **SECOND UPDATED VELOCITY MODEL**

735

765

## FIG. 7

710 ─────►

X [km]

0        10        20        30        40

Z [km]

5500
4500
3500  m/sec
2500
1500

## FIG. 8

**FIG. 9**

**FIG. 10**

**FIG. 11**

**FIG. 12**

**FIG. 13**

*FIG. 14*

*FIG. 15*

**FIG. 16**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 61896394 A
- US 32752411 A
- US 327524 A
- US 8387744 B
- US 291221 A
- US 7257049 B
- US 7725266 B
- US 8296069 B
- US 20120155217 A, Joseph A. Dellinger

### Non-patent literature cited in the description

- **L. SIRGUE ; R.G. PRATT.** Efficient Waveform Inversion and Imaging: A Strategy for Selecting Temporal Frequencies. *Geophysics,* 2004, vol. 69, 231
- **J.T. ETGEN ; S. BRANDBERG-DAHL.** The Pseudo-Analytical Method: Application of Pseudo-Laplacians to Acoustic and Acoustic Anisotropic Wave Propagation. *79nd Annual International Meeting, SEG, Expanded Abstracts,* 2009, 2552-2556
- **A. BRENDERS, A. et al.** Comparison of 3D Time- and Frequency-Domain Waveform Inversion: Benefits and Insights of a Broadband, Discrete-Frequency Strategy. *SEG Technical Program Expanded Abstracts,* 2012, 1-5
- **A. PICA et al.** Nonlinear Inversion of Seismic Reflection Data in a Laterally Invariant Medium. *Geophysics,* 1990, vol. 55, 284-292
- **R.M. SHIPP ; S. C. SINGH.** Two-Dimensional Full Wavefield Inversion of Wide-Aperture Marine Seismic Streamer Data. *Geophys. J. Int.,* 2002, vol. 151, 325-344
- **A. BRENDERS et al.** Comparison of 3D Time- and Frequency-Domain Waveform Inversion: Benefits and Insights of a Broadband, Discrete-Frequency Strategy. *SEG Technical Program Expanded Abstracts,* 2012, vol. 2012, 1-5